# EUROPÄISCHE PATENTSCHRIFT

(11) **EP 2 441 592 B1**
(45) Veröffentlichungstag und Bekanntmachung des Hinweises auf die Patenterteilung: **17.07.2013**
(21) Anmeldenummer: 11185050.9
(22) Anmeldetag: 13.10.2011
(51) Int. Cl.: B44C 5/04, E04F 13/00, E04F 15/00, E04F 15/04

(54) **Parkettdiele**
Parquet floor board
Planche de plancher en parquet

(30) Priorität: 13.10.2010 DE 102010048171
(43) Veröffentlichungstag der Anmeldung: 18.04.2012
(73) Patentinhaber: Schulte, Guido, 59602 Rüthen-Meiste (DE)
(72) Erfinder: Schulte, Guido, 59602 Rüthen-Meiste (DE)
(74) Vertreter: Ksoll, Peter

(56) Entgegenhaltungen:
- WO-A1-2007/065481
- DE-A1- 10 329 728
- DE-B3- 10 300 451
- DE-U1-202004 006 140
- DE-U1-202010 004 845
- JP-A- 11 127 903
- JP-A- 11 182 006
- JP-A- 2000 226 931

## Beschreibung

Die Erfindung betrifft eine Parkettdiele, welche eine Trägerplatte und eine Deckschicht aus Holz umfasst, wobei die Trägerplatte insbesondere eine hochdichte Faserplatte ist.

Parkett ist ein Fußbodenbelag aus Holz, der insbesondere für Räume in geschlossenen Gebäuden vorgesehen ist. Als sogenanntes Mehrschichtparkett ist Zweischicht- oder Dreischichtparkett gängig. Unter Zweischichtparkett versteht man eine Parkettart, welche als erste obere Schicht eine sichtbare Deckschicht aus Massivholz, auch als Nutzschicht bezeichnet und als zweite Schicht eine Trägerschicht besitzt. Diese beiden Schichten sind miteinander verbunden, in der Regel mit Holzleim, Harnstoffharze oder aber einem PU-Schmelzkleber. Als Trägerschicht kommt klassisch eine Weichholzschicht, eine Spanplatte oder eine hochdichte Faserplatte zur Anwendung. Bei einem Dreischichtparkett ist unterhalb der Trägerschicht noch ein Gegenzug vorgesehen.

Parkettdielen der gattungsgemäßen Art gehören allgemein zum Stand der Technik. Bei dem aus der DE 20 2004 006 140 U1 bekannten Zweischichtparkett sind die Seitenkanten der Parkettdielen mit einem Profil versehen, dass ein leimloses Verbinden zweier Parkettdielen miteinander in der Ebene der Parkettdielen und senkrecht zu dieser Ebene ermöglicht.

Die schwimmende Verlegung von Parkettdielen über mechanische Verriegelungsmittel, die an den Längsseiten und den Kopfseiten der Trägerplatte vorgesehen sind, ist auch aus der DE 103 00 451 B3 bekannt. Bei diesem Vorschlag sind in der Unterseite der Trägerplatte Schlitze vorgesehen, wodurch die Trägerplatte flexibler wird. Die Schlitze tragen ferner dazu bei, dass sich die verlegten Parkettdielen nicht verziehen.

Die DE 103 29 728 A1 offenbart ein Fußbodenelement mit einer Trägerplatte aus Holzwerkstoff oder Massivholz, deren obere oder untere Seite mit einer Verbundschicht beschichtet ist, bestehend aus einem bahnartigen Trägermaterial, beispielsweise einem Vlies, das mit härtbarem, nicht vollständig gehärtetem Harz imprägniert ist und expandierbare thermoplastische Teilchen und ein Lösungsmittel enthält. Die Verbundschicht und die Holzwerkstoffplatte werden unter Einwirkung von Wärme und gegebenenfalls Druck miteinander verbunden. Auf die Verbundschicht wird eine Fußbodennutz- und Dekorschicht aufgebracht.

Zum Stand der Technik zählen auch die JP 2000 226 931 A, die JP 11 182 006 A sowie die JP 11 127 903 A.

Die WO 2007/065481 A1 beschreibt ein Fußbodenpaneel mit einem Schichtaufbau, das ein verbessertes Brandschutzverhalten zeigt. Zu diesem Zweck ist im Schichtaufbau eine feuerhemmende Schicht vorgesehen.

Die DE 20 2010 004 845 U1 offenbart einen Plattenwerkstoff für den Innenausbau umfassend eine Trägerplatte auf Gips-Zement- oder Blech-Schiefer-Basis, auf deren Sichtseite ein Echtholzfurnier aufgebracht ist und das auf seiner Rückseite mit einer Vlieskaschierung versehen ist.

Im praktischen Einsatz unterliegt ein Mehrschichtparkett hohen mechanischen Belastungen. Hierbei kommt es zu Kippbewegungen der Parkettdielen und zu Verformungen, die sich aus den Holzdeckschichten ergeben. Dies geht zu Lasten der Lebensdauer des verlegten Parketts.

Weiterhin müssen Parkettdielen hohe Feuerschutzanforderungen erfüllen. Durch die DIN-EN 13 501-1 wird eine europäische Klassifikation des Brandverhaltens für Stoffe aller Art vorgegeben. Die Einordnung in die einzelne Brandklasse erfolgt aufgrund von Brandtests. Um bestimmte Brandklasse zu erreichen, werden bei Parkettdielen die Deckschichten aus Echtholz häufiger dicker dimensioniert als dies für die Gebrauchseigenschaften eigentlich notwendig wäre. Dies ist ökologisch und wirtschaftlich ungünstig.

Der Erfindung liegt ausgehend vom Stand der Technik die Aufgabe zugrunde, eine qualitativ verbesserte Parkettdiele zu schaffen, die insgesamt biegesteifer ist und darüber hinaus hohen Feuerschutzanforderungen gerecht wird.

Die Lösung dieser Aufgabe besteht in einer Parkettdiele gemäß Patentanspruch 1.

Erfindungsgemäß ist die Trägerplatte der Parkettdiele oberhalb und unterhalb mit einer Glasvlieslage versehen. Eine Glasvlieslage ist auf der Oberseite und der Unterseite der Trägerplatte vorgesehen. Durch die Glasvlieslagen wird die Trägerplatte biegesteifer und starrer und so besser geeignet zur Aufnahme von Verformungskräften aus der Deckschicht. Des Weiteren wird die Feuerfestigkeit der Parkettdiele erhöht. Eine Glasvlieslage ist mit aminoplastischen Harzen, beispielsweise Melamin, behandelt und weist feuerhemmende Eigenschaften auf. Möglich ist eine Melamin-Imprägnierung der Glasvlieslage. Durch die Einarbeitung von Melamin in die Glasvlieslage können die Klebeeigenschaften, die Feuchtebeständigkeit und die Feuerfestigkeit der Parkettdiele verbessert werden ebenso wie die Haltbarkeit.

Durch die in das Mehrschichtparkett integrierte Glasvlies kann die Brandklasse C_{fl} "schwer entflammbar" (nach DIN-EN 13 501-01) zuverlässig erreicht werden und zwar nahezu unabhängig von der Holzart und der Dichte der Deckschicht. Hierdurch ist eine Reduktion der Dicke der Deckschicht aus Echtholz möglich.

Vorteilhafte Ausgestaltungen und Weiterbildungen des grundsätzlichen Erfindungsgedankens sind Gegenstand der abhängigen Ansprüche 2 bis 10.

Vorzugsweise sind die Glasvlieslagen mit der Trägerplatte flächig, insbesondere vollflächig verklebt. Die Glasvliese können mit den üblichen Parkettklebstoffen aufgeleimt werden, beispielsweise mit Polyurethan-Klebstoffen oder Ähnlichem. Bei einer für die Praxis besonders vorteilhaften Parkettdiele die obere Glasvlieslage zwischen der Trägerplatte und der Deckschicht aus Echtholz angeordnet.

Erfindungsgemäß kommen Glasvlieslagen zur Anwendung, die ein Flächengewicht von 50 - 400 g/m² besitzen. Als besonders vorteilhaft werden Glasvlieslagen mit einem Flächengewicht von 100 - 200 g/m² angesehen.

Des Weiteren können in die Glasvlieslagen zusätzlich feuerhemmende Stoffe, beispielsweise auf mineralischer Basis, eingearbeitet sein. Hierdurch kann das Brandverhalten bzw. die Feuerfestigkeit der Parkettdiele zusätzlich bestimmt werden.

Auch die Einarbeitung von anderen Zusatzstoffen in das Glasvlies bzw. die Glasvlieslagen ist denkbar, um die mechanisch physikalischen Eigenschaften einzustellen. So können besondere Harze oder Additive mit elektrisch leitfähigen Komponenten in die Glasvlieslagen eingearbeitet sein. Die Einarbeitung von elektrisch leitfähigen Bestandteilen bzw. Komponenten in die Glasvlieslagen kann dazu benutzt werden, die elektrostatischen Eigenschaften der Parkettdiele einzustellen, um eine elektrostatische Aufladung zu verhindern oder eine statische Ableitfähigkeit der Parkettdiele sicher zu stellen. Auch dies hat u. a. brandschutztechnische Vorteile.

Unterseitig der Trägerplatte der erfindungsgemäßen Parkettdiele kann ein Gegenzug vorgesehen sein. Möglich ist ein Gegenzug aus Papier. Üblicherweise kommt ein Schälfurnier aus Weichholz als Gegenzug zum Einsatz

Aus verzugstechnischen Gründen ist es vorgesehen, bei einem Dreischicht-Parkettaufbau die Trägerplatte beidseitig mit einer Glasvlieslage zu versehen. Hierbei haben die beiden Glasvlieslagen unterschiedliche Vliesgewichte. So kann beispielsweise die obere Glasvlieslage ein Flächengewicht von 140 g/m² und die untere Glasvlieslage ein Flächengewicht von 80 g/m² besitzen. So können beispielsweise die unterschiedlichen Zugeigenschaften durch die Echtholzschichten (Deckschicht und Gegenzug) ausgeglichen werden.

Im Rahmen der Erfindung kommt als Trägerplatte insbesondere eine hochdichte Faserplatte (HDF) zur Anwendung. Da das Vlies bzw. die Glasvlieslagen die Platteneigenschaften verbessert, sind auch Aufbauten mit einer Trägerplatte aus einer mitteldichten Faserplatte (MDF) oder einer Spanplatte als Trägerplatte möglich. Bei Einsatz einer mitteldichten Faserplatte als Trägerplatte kommt vorzugsweise ein Material mit einem Gewicht kleiner 800 kg/m³ zur Anwendung.

Im Rahmen einer Weiterentwicklung können die Glasvlieslagen als Heizelement ausgebildet sein. Durch die Einarbeitung von elektrisch leitfähigen Komponenten in die Glasvlieslagen kann diese als Heizschicht genutzt werden, beispielsweise nach Art einer Widerstandsheizung. Die Glasviieslagen sind material- und bauteilmäßig so ausgelegt, konfiguriert und mit den notwendigen Zusatzstoffen und Anschlüssen versehen, dass sie zur Wärmeerzeugung geeignet ist. Hierzu wird insbesondere der elektrische Widerstand der Glasvlieslagen genutzt. Insbesondere ist eine zwischen Trägerplatte und Deckschicht angeordnete Glasvlieslage als Heizelement ausgebildet.

Die Deckschicht der Parkettdiele kann mit einer Beschichtung versehen sein. Die Beschichtung kann beispielsweise aus einer Lackschicht bestehen. Des Weiteren ist es möglich, die Deckschicht mit einer Versiegelung zu versehen, beispielsweise durch einen Auftrag von Öl. Die Oberfläche der Deckschicht kann auch gebürstet oder geschliffen sein.

Die Glasvlieslage und die Deckschicht sowie gegebenenfalls der Gegenzug können nacheinander mit der Trägerplatte verleimt werden. Bei dünnen Deckschichten mit einer Dicke kleiner als 3,5 mm können die Deckschicht und die Glasvlieslage gemeinsam in einem Arbeitsgang auf die Trägerplatte aufgebracht werden.

Verfahrenstechnisch ist es sinnvoll, das Glasvlies als Flächengebilde in Abmessungen von circa 1,0 bis 1,25 m Breite bei einer Länge zwischen 1,8 m und 2,6 m auf die Trägerplatte aufzulegen und zu verpressen und danach in weiteren Schritten die Deckschichten und gegebenenfalls Gegenzüge aufzubringen und zu verpressen. Selbstverständlich ist es auch möglich, den Mehrschichtaufbau als Gesamtsandwich in einem Pressvorgang zu verleimen. Hierbei kommen mehrere Beleimungsstationen für die einzelnen Schichten zur Anwendung. Die Legung der Glasvlieslagen kann manuell oder maschinell erfolgen. Hierbei können die Glasvlieslagen als Blattware verarbeitet werden. Auch kann das Glasvlies von einer Rolle als Bandware abgezogen und verarbeitet werden.

Zur Verlegung der Parkettdielen sind diese randseitig profiliert und mit Koppelmitteln versehen. Die Koppelmittel gelangen bei in einem Fußbodenbelag benachbarten Parkettdielen miteinander in Eingriff. Gängig sind Koppelmittel in Form von Nut und Feder sowie sogenannten Klippsysteme bei denen die Koppelmittel miteinander in rastenden Eingriff gelangen.

Bei Zweischichtparkett, welches mit dem Untergrund verklebt wird, kann es vorteilhaft sein, in der Unterseite der Trägerplatte Ausnehmungen vorzusehen, beispielsweise in Form von Schlitzen, die sich über die Breite der Trägerplatte erstrecken. Hierdurch kann die Verklebung der Parkettdielen mit dem Untergrund verbessert werden.

Insgesamt ist nochmals herauszustellen, dass durch die Glasvlieslagen die mechanischen Eigenschaften, insbesondere die Biegesteifigkeit der Trägerplatte verbessert werden. Eine erfindungsgemäße Parkettdiele zeichnet sich durch eine bessere Stabilität und die Erhöhung der Brandbeständigkeit aus. Die Glasvlieslagen bewirken, dass der Gesamtaufbau der Parkettdiele stabiler ist und die Eindruckbeständigkeit eines Echtholz-Parkettbodens erhöht wird. Im Alltag führt dies dazu, dass der Boden auch mehrfach abgeschliffen werden kann.

Eine Parkettdiele, bei welcher gegenüber der Erfindung die untere Glasvlieslage fehlt, nachfolgend anhand eines in der Zeichnung dargestellten Ausführungsbeispiels näher beschrieben. Es zeigt:

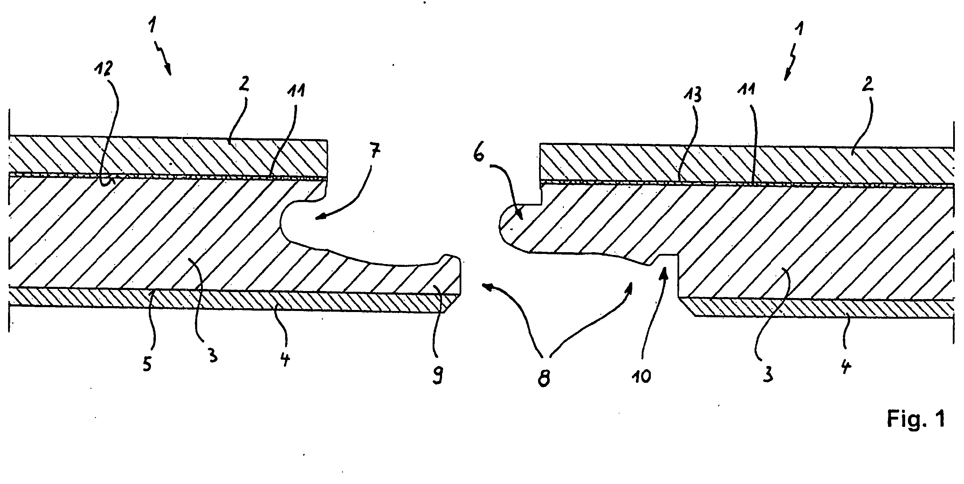

- Figur 1: einen Querschnitt durch das nutseitige Ende und das federseitige Ende einer Parkettdiele.

Eine Parkettdiele 1 ist üblicherweise rechteckig konfiguriert und weist eine Deckschicht 2 aus Hart- bzw. Massivholz und eine Trägerplatte 3 aus einer hochdichten Faserplatte (HDF) auf. Unterseitig ist ein Gegenzug 4 vorgesehen, der mit der Unterseite 5 der Trägerplatte 3 vollflächig verleimt ist. Der Gegenzug 4 sorgt für eine Stabilisierung der Parkettdiele 1.

Die Parkettdiele 1 weist an einer Längsseite und an einer Stirnseite jeweils eine Feder 6 und an der anderen Längsseite und an der anderen Stirnseite eine an den Querschnitt der Feder 6 angepasste Nut 7 auf. In den Nuten 7 und an den Federn 6 sind Koppelmittel 8 ausgebildet, welche bei in einem Fußbodenbelag benachbarten Parkettdielen 1 miteinander in rastenden Eingriff gelangen. Die Koppelmittel 8 umfassen den Nuten 7 vorgelagerte begrenzt federnde Rastzungen 9, die mit Rastnuten 10 unterhalb der Federn 6 gefügt werden können. Über die Federn 6 und Nuten 7 können Parkettdielen 1 sowohl über ihre Längsseiten als auch über ihre Stirnseiten spaltfrei und leimlos zug- und druckfest gefügt werden.

Zwischen der Deckschicht 2 und der Trägerplatte 3 ist eine obere Glasvlieslage 11 integriert. Die Glasvlieslage 11 ist mit der Oberseite 12 der Trägerplatte 3 vollflächig verklebt. Ebenso ist die Glasvlieslage 11 mit der Unterseite 13 der Deckschicht 2 vollflächig verklebt.

Die Glasvlieslage 11 besitzt ein Flächengewicht von 50 - 400 g/m², insbesondere von 100 - 200 g/m² und ist melaminbehandelt bzw. -imprägniert.

Die Glasvlieslage 11 verleiht der Parkettdiele 1 eine hohe Biegesteifigkeit. Durch die Glasvlieslage 11 ist die Parkettdiele 1 besser geeignet zur Aufnahme von Verformungskräften aus der Deckschicht 2, die diese unter Belastung in einen verlegten Parkettboden erfährt. Darüber hinaus erhöht die Glasvlieslage 11 die Feuerfestigkeit der Parkettdiele 1. Eine brandschutztechnische Einstufung in die Brandklasse C_{fl-s1} "schwer entflammbar" nach DIN EN 13 501-01 wird zuverlässig erreicht.

Sichtseitig kann die Deckschicht mit einer Beschichtung und/oder Versiegelung versehen werden. Auch eine optische Effekteinstellung durch Schleifen oder Bürsten ist möglich.

## Patentansprüche

1. Parkettdiele (1), bestehend aus einer Deckschicht (2) aus Holz und einer Trägerplatte (3), wobei oberhalb der Trägerplatte (3) eine obere Glasvlleslage (11) vorgesehen ist und unterhalb der Trägerplatte (3) eine untere Glasvlieslage (11) vorgesehen ist, wobei zumindest eine Glasvlieslage (11) mit aminoplastischen Harzen, beispielsweise Melamin, behandelt ist und feuerhemmende Eigenschaften besitzt, **dadurch gekennzeichnet, dass** die obere Glasvlieslage (11) und die untere Glasvlieslage (11) voneinander verschiedene Flächengewichte besitzen. ,

2. Parkettdiele nach Anspruch 1, **dadurch gekennzeichnet, dass** die Glasvlieslagen (11) mit der Trägerplatte (3) flächig verklebt sind.

3. Parkettdiele nach Anspruch 1 oder 2, **dadurch gekennzeichnet, dass** die Glasvlieslagen (11) ein Flächengewicht von 50 bis 400 g/m², insbesondere von 100 bis 200 g/m² besitzen.

4. Parkettdiele nach einem der Ansprüche 1 bis 3,
**dadurch gekennzeichnet, dass** in die Glasvlieslagen (11) feuerhemmende Stoffe eingearbeitet sind.

5. Parkettdiele nach einem der Ansprüche 1 bis 4,
**dadurch gekennzeichnet, dass** an den Längsseiten und an den Kopfseiten der Trägerplatte (3) Koppelmittel (8) vorgesehen sind, welche bei in einem Fußbodenbelag benachbarten Parkettdielen (1) miteinander in Eingriff gelangen.

6. Parkettdiele nach einem der Ansprüche 1 bis 5, **dadurch gekennzeichnet, dass** unterseitig der Trägerplatte (3) ein Gegenzug (4) vorgesehen ist.

7. Parkettdiele nach einem der Ansprüche 1 bis 6, **dadurch gekennzeichnet, dass** die Deckschicht (2) mit einer Beschichtung versehen ist.

8. Parkettdiele nach einem der Ansprüche 1 bis 7, **dadurch gekennzeichnet, dass** die Deckschicht (2) mit einer Versiegelung versehen ist.

9. Parkettdiele nach einem der Ansprüche 1 bis 8, **dadurch gekennzeichnet, dass** mindestens eine Glasvlieslage als Heizelement ausgebildet ist.

10. Parkettdiele nach einem der Ansprüche 1 bis 9, **dadurch gekennzeichnet, dass** in der Unterseite der Trägerplatte (3) Ausnehmungen vorgesehen sind, welche sich über die Breite der Trägerplatte (3) erstrecken.

## Claims

1. A parquet floor board (1), consisting of a top layer (2) of wood and a support board (3), an upper glass fibre nonwoven ply (11) being provided above the support board (3) and a lower glass fibre nonwoven ply (11) being provided below the support board (3), at least one glass fibre nonwoven ply (11) being treated with aminoplastic resins, for example melamine, and having fire-retardant properties, **characterised in that** the upper glass fibre nonwoven ply (11) and the lower glass fibre nonwoven ply (11) have basis weights which differ from one another.

2. A parquet floor board according to claim 1, **characterised in that** the glass fibre nonwoven plies (11) are adhesively bonded over the surface of the support board (3).

3. A parquet floor board according to claim 1 or claim 2, **characterised in that** the glass fibre nonwoven plies have a basis weight of 50 to 400 g/m², in particular of 100 to 200 g/m².

4. A parquet floor board according to any one of claims 1 to 3, **characterised in that** fire-retardant substances are incorporated into the glass fibre nonwoven plies (11).

5. A parquet floor board according to any one of claims 1 to 4, **characterised in that** coupling means (8) are provided on the longitudinal sides and at the ends of the support board (3), which coupling means engage with one another in parquet floor boards (1) which are adjacent one another when laid as a floor covering.

6. A parquet floor board according to any one of claims 1 to 5, **characterised in that** a backing layer (4) is provided beneath the support board (3).

7. A parquet floor board according to any one of claims 1 to 6, **characterised in that** the top layer (2) is provided with a coating.

8. A parquet floor board according to any one of claims 1 to 7, **characterised in that** the top layer (2) is provided with sealing.

9. A parquet floor board according to any one of claims 1 to 8, **characterised in that** at least one glass fibre nonwoven ply takes the form of a heating clement.

10. A parquet floor board according to any one of claims 1 to 9, **characterised in that** recesses, which extend over the width of the support board (3), are provided in the underside of the support board (3).

## Revendications

1. Planche pour parquet (1) se composant d'une couche de recouvrement (2) en bois et d'une plaque support (3), une couche de mat de libres de verre (11) supérieure étant prévue au-dessus de la plaque support (3) et une couche de mat de fibres de verre (11) inférieure étant prévue au-dessous de la plaque support (3), au moins une couche de mat de fibres de verre (11) étant traitée avec des résines amino, par exemple de la mélamine et possédant des propriétés ignifuges, **caractérisée en ce que** la couche de mat de libres de verre supérieure (11) et la couche de mat de fibres de verre inférieure (11) possèdent des grammages différents.

2. Planche pour parquet selon la revendication 1, **caractérisée en ce que** les couches de mat de fibres de verre (11) sont collées sur la surface de la plaque support (3).

3. Planche pour parquet selon la revendication 1 ou 2, **caractérisée en ce que** les couches de mat de libres de verre (11) possèdent un grammage de 50 à 400 g/m², en particulier de 100 à 200 g/m².

4. Planche pour parquet selon l'une quelconque des revendications 1 à 3, **caractérisée en ce que** des substances ignifuges sont insérées dans les couches de mat de fibres de verre (11).

5. Planche pour parquet selon l'une quelconque des revendications 1 à 4, **caractérisée en ce que** des moyens de couplage (8) qui parviennent en engagement les uns avec les autres, en cas de planches pour parquet (1) contigües dans un revêtement de sol, sont prévus sur les côtés longitudinaux et sur les côtés de tête de la plaque support (3).

6. Planche pour parquet selon l'une quelconque des revendications 1 à 5, **caractérisée en ce qu'**une contre-traction (4) est prévue côté inférieur de la plaque support (3).

7. Planche pour parquet selon l'une quelconque des revendications 1 à 6, **caractérisée en ce que** la couche de recouvrement (2) est pourvue d'un revêtement.

8. Planche pour parquet selon l'une quelconque des revendications 1 à 7, **caractérisée en ce que** la couche de recouvrement (2) est pourvue d'une vitrification.

9. Planche pour parquet selon l'une quelconque des revendications 1 à 8, **caractérisée en ce qu'**au moins une couche de mat de fibres de verre est réalisée comme un élément chauffant.

10. Planche pour parquet selon l'une quelconque des revendications 1 à 9, **caractérisée en ce que** des évidements qui s'étendent sur la largeur de la plaque support (3) sont prévus dans le côté inférieur de la plaque support (3).
